# FASCICULE DE BREVET EUROPEEN

(11) **EP 3 038 882 B1**
(45) Date de publication et mention de la délivrance du brevet: **14.02.2018**
(21) Numéro de dépôt: 14747071.0
(22) Date de dépôt: 30.06.2014
(51) Int. Cl.: B62D 25/16, B62D 29/04

(54) **DISPOSITIF DE FIXATION À DEUX MODES D'UTILISATION ET VÉHICULE AUTOMOBILE COMPRENANT UN TEL DISPOSITIF**
BEFESTIGUNGSVORRICHTUNG MIT ZWEI BETRIEBSMODI UND KRAFTFAHRZEUG MIT SOLCH EINER VORRICHTUNG
FASTENING DEVICE WITH TWO USE MODES AND MOTOR VEHICLE COMPRISING SUCH A DEVICE

(30) Priorité: 30.08.2013 FR 1358299
(43) Date de publication de la demande: 06.07.2016
(73) Titulaire: Renault S.A.S., 92100 Boulogne-Billancourt (FR)
(72) Inventeur: HENRY, Nicolas, F-78310 Maurepas (FR)
(86) Numéro de dépôt international: PCT/FR2014/051669
(87) Numéro de publication internationale: WO 2015/028729

(56) Documents cités:
- DE-A1- 19 809 935
- FR-A1- 2 947 314
- US-A- 5 028 190

## Description

### Domaine de l'invention :

La présente invention concerne un dispositif de fixation. Elle se rapporte plus particulièrement à un dispositif de fixation de deux éléments, apte à assurer dans une première configuration un prémaintien autorisant un coulissement relatif entre les deux éléments, et dans une seconde configuration une fixation complète des deux éléments. L'invention se rapporte également à un véhicule automobile pourvu d'un tel dispositif de fixation.

### Etat de la technique :

On connaît dans l'état de la technique des dispositifs de fixation entre deux éléments permettant d'assurer dans une première configuration d'utilisation une fonction de prémaintien et dans une seconde configuration d'utilisation une fonction de fixation complète ou définitive. On connait de FR2947314-A1 un tel dispositif de fixation.

Dans le secteur automobile par exemple, une aile avant en matière plastique peut être montée sur la structure du véhicule préalablement à son passage en cataphorèse et en étuve. Or le passage en étuve soumet l'aile à des températures élevées, de l'ordre de 100°C à 120°C. Cette température engendre une dilatation / déformation de l'aile plastique pouvant atteindre 30 mm suivant la direction longitudinale du véhicule. L'aile est classiquement fixée à la structure du véhicule en trois points de fixation : deux points de fixation arrière haut et bas sur un renfort de côté d'auvent et un point de fixation avant sur ce même renfort via un support d'aile. Ainsi lors du passage en étuve il est nécessaire de prévoir une possibilité de dilatation de l'aile suivant la direction longitudinale du véhicule. De façon connue, l'aile comporte une patte latérale s'étendant suivant la direction transversale vers l'intérieur du véhicule. La patte latérale prend appui verticalement sur le support d'aile solidaire de la structure du véhicule. La patte latérale s'étend suivant la direction longitudinale du véhicule et comporte une lumière s'étendant suivant cette même direction. Cette lumière est traversée par un organe de guidage traversant la lumière et clippé verticalement dans un orifice ménagé sur le renfort d'aile. L'organe de guidage est ajusté dans la lumière de sorte que la partie avant de l'aile peut coulisser par rapport à l'organe de guidage et au support d'aile suivant la dimension longitudinale du véhicule tout en assurant une indexation suivant la direction transversale. Une fois les passages en cataphorèse et en étuve réalisés, l'aile reprend sa dimension définitive en refroidissant. La fixation complète de l'aile sur le support d'aile est réalisée par un système vis-écrou qui est situé à proximité de l'organe de guidage, typiquement à l'arrière de ce dernier. La vis traverse la lumière de la patte latérale ainsi qu'un autre orifice ménagé sur le support d'aile. La vis est serrée de façon à assurer une fixation complète de l'aile sur le support d'aile.

Un tel dispositif de fixation est encombrant puisqu'il comprend un organe de guidage et un système vis-écrou dissociés et juxtaposés suivant la direction longitudinale du véhicule. En outre ces pièces multiples imposent autant de manipulations et d'opérations de mise en place.

De plus, l'organe de guidage et le système vis-écrou sont typiquement situés à proximité d'une fixation arrière fusible du projecteur. Le projecteur comprend dans sa partie arrière une patte de fixation fusible assurant la fixation par vis du projecteur sur le support d'aile, ainsi que son indexation. Cette fixation fusible permet une rupture de la fixation en cas de chocs « RCAR » correspondant à des chocs à vitesses inférieurs à 15km/h (norme répondant aux préconisations d'assureurs visant à réduire les frais de réparation). De façon connue, l'indexation suivant les directions longitudinale et transversale de la patte arrière du projecteur est assurée directement sur le support d'aile par un pion issu de la patte arrière qui coopère avec un orifice ou une encoche ménagé sur le support d'aile. L'indexation du projecteur sur le support d'aile dégrade la chaîne de cotes et engendre des dispersions géométriques qui ne permettent pas de bien maitriser les jeux et affleurements entre le projecteur et le bord d'aile, visibles depuis l'extérieur du véhicule. En outre, ces moyens de fixation et d'indexation de la patte arrière du projecteur encombrent encore davantage la zone de fixation de l'aile.

### But de l'invention :

L'invention a pour but de pallier tout ou partie des inconvénients précédents en proposant un dispositif de fixation qui pallie tout ou partie des inconvénients précédents en terme d'encombrement, de pluralité de pièces à monter et de défauts géométriques.

### Objet de l'invention :

A cet effet, l'invention a pour objet un dispositif de fixation d'une première platine sur un seconde platine accolées l'une contre l'autre, l'une des platines étant pourvue d'une fenêtre tandis que l'autre platine comporte une lumière de guidage placée en vis-à-vis de la fenêtre, caractérisé en ce qu'il comprend un ensemble vis-écrou, la vis et l'écrou étant introduits au travers de la fenêtre et de la lumière jusqu'à une position de butée dans laquelle une collerette adjacente à la tête de vis prend appui sur l'une des platines, tandis que l'écrou comprend des conformations de clippage coopérant en butée avec l'autre platine pour empêcher l'extraction de l'ensemble vis-écrou, l'écrou comprenant un système quart de tour, mobile sous l'influence d'une rotation imprimée à la vis, entre d'une part une position angulaire initiale dans laquelle l'écrou est introduit dans la fenêtre et la lumière, l'écrou comportant des flancs de guidage ajustés avec des bords correspondants de la fenêtre et de la lumière pour caler les platines l'une par rapport à l'autre transversalement à la direction longitudinale de la lumière tout en autorisant un coulissement relatif entre les platines dans la direction longitudinale, et d'autre part une position angulaire finale dans laquelle des flancs de blocage de l'écrou coopèrent en butée contre des bords correspondants de la fenêtre et de la lumière pour limiter la rotation de l'écrou, la vis et l'écrou étant de ce fait aptes à être serrés de façon à assurer une fixation complète entre les deux platines via des épaulements conformés sur l'écrou, lesquels sont décalés angulairement par rapport à la fenêtre et à la lumière pour coopérer en contact avec la platine adjacente.

Ainsi le dispositif de fixation assure plusieurs fonctions :
- une fonction de prémaintien et de guidage de l'une des platines par rapport à l'autre, permettant un déplacement longitudinal entre les platines,
- une fonction de fixation complète des platines entre elles.
Cette intégration de fonctions au sein d'un même dispositif implique une forte compacité du dispositif et une réduction des pièces à approvisionner et à monter. En outre, dans une application automobile telle que la fixation d'une aile avant en matière plastique sur la structure d'un véhicule automobile, le gain de place obtenu par cette compacité permet d'indexer la partie arrière du projecteur directement sur l'aile elle-même, à proximité du dispositif de fixation. La chaîne de cotes et les dispersions géométriques sont ainsi réduites entre les éléments à assembler et à ajuster, en l'espèce entre un bord avant de l'aile et le projecteur avant, ce qui assure une finition de la carrosserie et une qualité perçue optimales depuis l'extérieur du véhicule. En outre l'écrou est constitué d'un ensemble monobloc comprenant un corps principal ayant en vue de côté la forme générale d'un T à l'envers s'étendant suivant la direction axiale de vissage, l'épaisseur du T étant inférieure aux dimensions transversales de la fenêtre et de la lumière, le corps principal se décomposant d'une part en un bloc supérieur formant la jambe du T sur lequel sont ménagés les flancs de guidage et les flancs de blocages suivant des génératrices cylindriques parallèles à la direction axiale de vissage, et d'autre part en un bloc inférieur formant la branche transversale du T aux extrémités de laquelle sont situés les épaulements. De plus le bloc supérieur a une forme générale inscrite dans un carré dont deux côtés opposés épousent les flancs de guidage et deux autres côtés opposés épousent les flancs de blocage, les jonctions entre les flancs de guidage et les flancs de blocage étant réalisées sous la forme de deux arêtes opposées et de deux formes arrondies autorisant la rotation d'un quart de tour de l'écrou entre les positions angulaires initiale et finale.

Selon d'autres caractéristiques avantageuses de l'invention :
- le bloc inférieur a une forme allant en s'évasant depuis son bord adjacent au bloc supérieur vers son bord libre opposé,
- les conformations de clippage s'étendent depuis des faces opposées du bloc inférieur ces faces définissant entre elles l'épaisseur du T.

L'invention a également pour objet un véhicule automobile comprenant au moins une aile latérale en plastique montée sur la structure du véhicule, l'aile étant fixée dans sa partie avant à un support d'aile solidaire de la structure du véhicule, caractérisé en ce qu'il comprend un dispositif de fixation selon l'une quelconque des revendications précédentes, la première platine étant venue de matière avec l'aile tandis que la seconde platine est une partie intégrante du support d'aile.

Selon d'autres caractéristiques avantageuses de l'invention :
- la fenêtre est ménagée dans la première platine tandis que la lumière est ménagée dans la seconde platine, la longueur de la lumière étant comprise entre 40 mm et 60 mm, la longueur de la fenêtre étant comprise entre 20 et 30 mm,
- le véhicule comprend un projecteur optique comportant dans sa partie arrière une patte munie d'une zone de fusibilité en cas de choc, à l'arrière de laquelle est prévue un pion d'indexation coopérant directement avec un orifice ménagé dans la première platine, la patte étant fixée au support d'aile via une vis de fixation située entre le pion d'indexation et la zone de fusibilité,
- la première et la seconde platines s'étendent transversalement à la direction longitudinale depuis l'aile et la structure du véhicule vers l'intérieur du véhicule, la fenêtre et la lumière s'étendant de façon sensiblement parallèle à la direction longitudinale du véhicule.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective de la zone de fixation avant d'une aile avant sur la structure d'un véhicule automobile, dans laquelle est situé un dispositif de fixation suivant l'invention, le projecteur avant n'étant pas représenté,
- la figure 2 est une vue agrandie de la zone de fixation de la figure 1 dans laquelle se situent le dispositif de fixation de l'invention et la fixation arrière d'un projecteur optique avant du véhicule,
- les figures 3 et 4 sont des vues encore agrandies du dispositif de fixation de l'invention, avec et sans la fixation arrière du projecteur optique dans le contexte de la zone de fixation de la figure 1,
- les figures 5 à 8 sont différentes vues de côté ou en perspective du dispositif de fixation de l'invention pourvu du système complet vis-écrou,
- les figures 9 et 10 sont des vues en perspective et de dessus de l'écrou seul du dispositif selon l'invention,
- les figures 11 à 13 sont des vues de dessus illustrant différentes phases dans le montage du dispositif de fixation selon l'invention, entre les positions angulaires initiale et finale,
- la figures 14 et 15 sont des vues en perspectives du dispositif de fixation selon l'invention associé à la platine comportant une lumière de guidage, représentées respectivement avec et sans la vis.

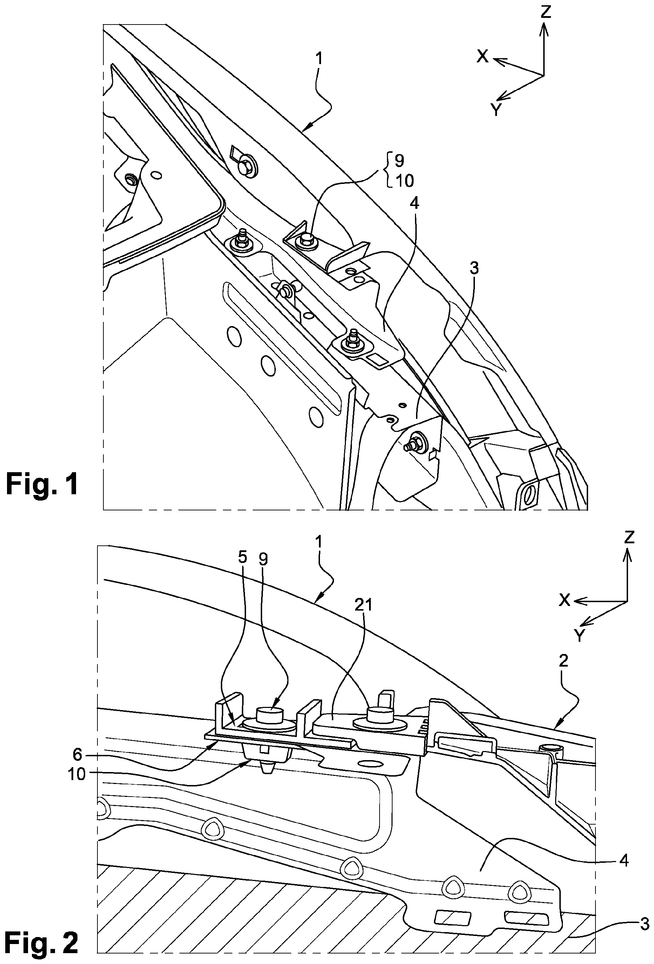

Dans l'ensemble du texte, les directions sont indiquées en référence au repère XYZ classiquement utilisé en conception automobile, dans lequel X désigne la direction longitudinale avant-arrière du véhicule, dirigée vers l'arrière, Y la direction transversale du véhicule, dirigée vers la droite, et Z la direction verticale du véhicule dirigée vers le haut.
On a représenté aux figures 1 et 2 une vue partielle de la partie avant gauche d'un véhicule automobile, illustrant la zone de fixation d'une aile 1 avant et d'un projecteur 2 optique avant gauche du véhicule. Ce véhicule comprend typiquement une aile avant en matière plastique. Celle-ci est montée sur la structure 3 du véhicule préalablement au passage de la structure en cataphorèse et en étuve. L'aile est classiquement fixée à la structure en trois points de fixation : deux points de fixation arrière haut et bas ainsi qu'un point de fixation avant, ces points se répartissant le maintien mécanique et l'isostatisme de l'aile. Le point de fixation avant assure essentiellement une fixation selon les directions Y et Z. L'élément de structure du véhicule sur lequel est fixée l'aile 1 est typiquement un « renfort de côté d'auvent » selon la terminologie de l'homme. Dans sa partie avant, cette fixation à la structure 3 est réalisée par l'intermédiaire d'un support 4 d'aile qui est une pièce emboutie venue de ferrage fixée ou soudée à un longeron avant du véhicule ou au renfort de côté d'auvent. Selon un angle de vue parallèle à la direction longitudinale X, ce support 4 a la forme générale d'un U basculé à 90° dont l'une des branches du U, située en partie supérieure, définit une platine sur laquelle vient se fixer une platine correspondante venue de l'aile 1. Dans la suite de l'exposé, on désignera les platines de l'aile et du support d'aile respectivement par les termes « première platine 5 » et seconde platine 6 ».
Le passage en cataphorèse et en étuve de l'aile 1 implique une dilatation de cette dernière qui peut atteindre 30 mm dans la direction longitudinale X. Considérant que la structure se dilate d'une façon infime en comparaison, la partie avant de l'aile 1 est fixée à la structure du véhicule par l'intermédiaire du dispositif de fixation suivant l'invention, qui assure deux fonctions suivant les phases d'utilisation : dans une première phase, le dispositif de fixation assure un prémaintien de l'aile 1 durant les phases de cataphorèse et de passage en étuve, ce prémaintien autorisant un déplacement de la partie avant de l'aile 1 suivant la direction longitudinale X, de façon à autoriser la dilatation et la rétractation de l'aile; dans une seconde phase, le dispositif de fixation assure une fixation complète de l'aile 1 sur la structure, supprimant tous les mouvements possible.

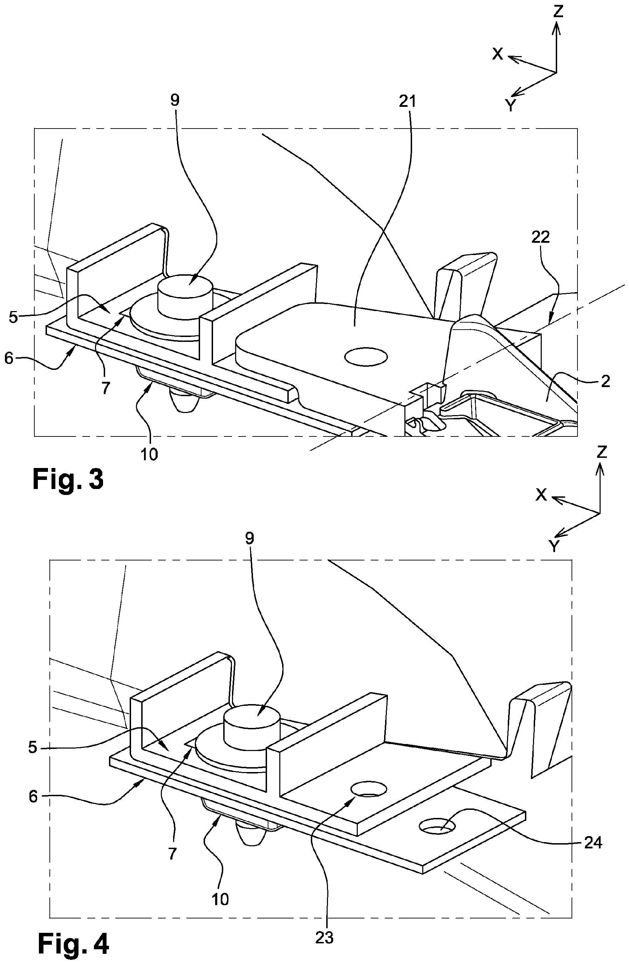

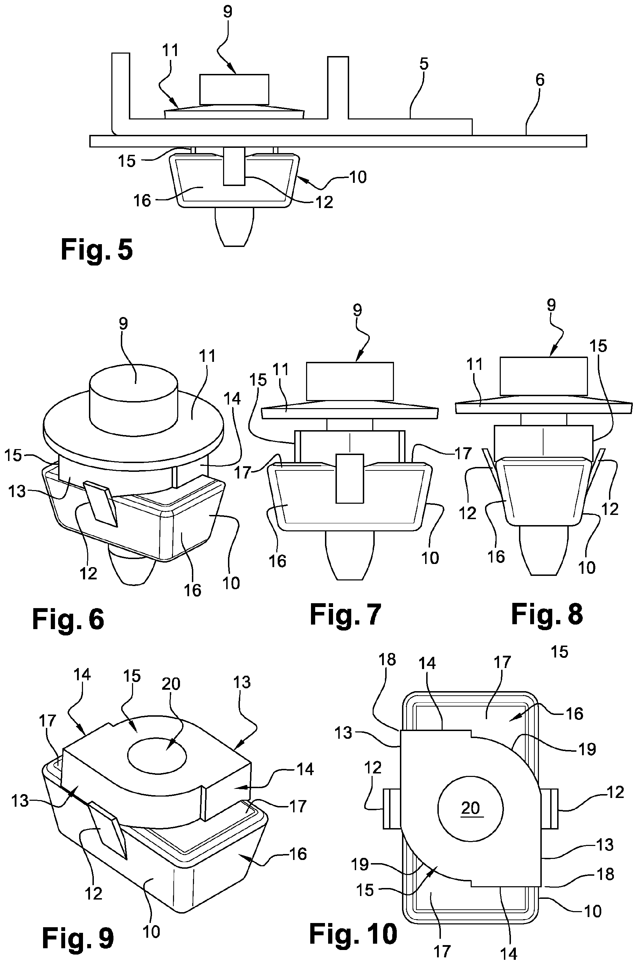

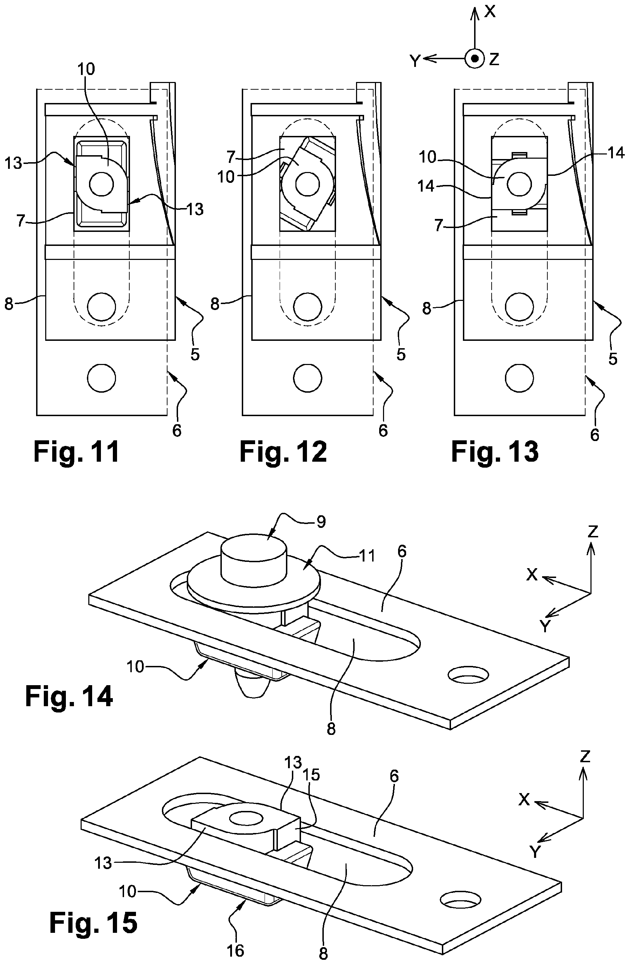

Pour ce faire, le dispositif de fixation de l'invention visant à solidariser la première platine 5 sur la seconde platine 6 accolées l'une contre l'autre est défini comme suit: la première platine 5 comporte une fenêtre 7 (figures 3, 4, 11-13). La seconde platine 6 comporte une lumière de guidage 8 (figures 11-15), placée en vis-à-vis de la fenêtre 7. La fenêtre 7 a une forme allongée s'étendant, à l'instar de la lumière 8 suivant la direction longitudinale X du véhicule.
En référence aux figures 1 à 10, le dispositif de fixation de l'invention comprend un ensemble vis-écrou constitué d'une vis 9 et d'un écrou 10 introduits conjointement au travers de la fenêtre 7 et de la lumière 8 jusqu'à une position de butée dans laquelle une collerette 11 adjacente à la tête de vis prend appui sur la première platine 5. La collerette 11 peut être directement constituée par la tête de vis. L'écrou 10 comprend des conformations de clippage 12, typiquement deux pattes élastiquement déformables, situées de part et d'autre du corps principal de l'écrou 10, ces ailettes coopérant en butée avec la seconde platine 6 aux abords de la lumière 8, pour empêcher l'extraction de l'ensemble vis-écrou. Lors du montage la vis 9 est partiellement vissée sur l'écrou 10. L'écrou 10 comprend un système quart de tour, mobile sous l'influence d'une rotation imprimée à la vis. La rotation est réalisée entre d'une part une position angulaire initiale (figures 5, 11, 14, 15) dans laquelle l'écrou 10 est introduit dans la fenêtre 7 et la lumière 8, l'écrou 10 comportant des flancs de guidage 13 ajustés avec des bords correspondants de la fenêtre 7 et de la lumière 8 pour caler et prémaintenir les platines 5, 6 l'une par rapport à l'autre suivant la direction transversale Y, tout en autorisant un coulissement relatif entre les platines 5, 6 dans la direction longitudinale X, et d'autre part une position angulaire finale (figure 13) dans laquelle des flancs de blocage 14 (figures 9, 10) de l'écrou 10 coopèrent en butée contre des bords correspondants de la fenêtre 7 et de la lumière 8 pour limiter la rotation de l'écrou 10 à un quart de tour. Dans cette dernière position, l'écrou 10 est bloqué en rotation lorsque la rotation imprimée à la vis 9 s'effectue toujours dans le même sens. La rotation de la vis 9 toujours dans le même sens provoque alors la remontée de l'écrou 10 en vue du serrage complet des platines 5, 6. L'écrou 10 comprend pour cela des épaulements 17 (figures 7, 9, 10) dont les dimensions sont ajustées pour passer au travers de la fenêtre 7 et de la lumière 8 lorsque l'ensemble vis-écrou est dans sa configuration angulaire initiale (figure 11), mais dont les formes viennent coopérer en contact avec la seconde platine 6, aux abords de la lumière 8 lorsque l'ensemble vis-écrou est disposé dans sa position angulaire finale (figure 13).
Comme on le voit aux figures 5 à 10, l'écrou 10 est constitué d'un ensemble monobloc comprenant un corps principal ayant en vue de côté la forme générale d'un T à l'envers s'étendant suivant la direction axiale de vissage. L'épaisseur du T est légèrement inférieure aux dimensions transversales de la fenêtre 7 et de la lumière 8. Un jeu de l'ordre d'un à deux millimètres est ménagé vis-à-vis des platines 5, 6 de façon à faire passer l'écrou dans la fenêtre 7 et la lumière 8. Le corps principal de l'écrou 10 se décompose en un bloc supérieur 15 et un bloc inférieur 16. Le bloc supérieur 15 forme la jambe du T sur laquelle sont ménagés les flancs de guidage 13 et les flancs de blocages 14. Ces flancs sont conformés suivant des génératrices cylindriques parallèles à la direction axiale de vissage. Le bloc inférieur 16 forme la branche transversale du T aux extrémités de laquelle sont situés les épaulements 17. Les conformations de clippage 12 constituées des pattes élastiquement déformables s'étendent depuis des faces opposées du bloc inférieur 16 ces faces définissant entre elles l'épaisseur du T. Le bloc inférieur 16 a la forme générale d'un parallélépipède allongé dont la longueur est légèrement inférieure à la longueur de la fenêtre 7. Un jeu de l'ordre de 1 à 2 mm est ménagé entre le bloc inférieur 16 et la fenêtre 7 de façon à faciliter son passage dans celle-ci. Les conformations de clippage 12 sont situées au milieu des côtés longs de la forme allongée du bloc inférieur 16 (figures 9, 10).
En référence aux figures 5, 7, 8, on fait également observer que le bloc inférieur 16 a une forme fuselée sur ses quatre côtés, depuis son bord adjacent au bloc supérieur 15 vers son bord libre opposé. Cet aspect vis encore à faciliter le passage du bloc inférieur 16 dans la fenêtre et la lumière.
En vue de dessus, sensiblement suivant la direction verticale Z, le bloc supérieur 15 a une forme générale inscrite dans un carré dont deux côtés opposés épousent en partie les flancs de guidage 13 et deux autres côtés opposés épousent en partie les flancs de blocage 14. Les flancs de guidage 13 et les flancs de blocage 14 se rejoignent sous la forme de deux arêtes opposées 18 (correspondant à deux angles opposés du carré) et de deux formes arrondies 19, lesquelles permettent la rotation d'un quart de tour de l'écrou 10 entre les positions angulaires initiale et finale par glissement le long des bords longitudinaux de la fenêtre 7 et de la lumière 8.
L'écrou 10 comporte un trou central 20 fileté (figures 9, 10) traversant le bloc supérieur 15 et le bloc inférieur 16 de part en part, sensiblement suivant la direction verticale Z lorsque l'ensemble vis-écrou est en place sur le véhicule.

En référence aux figures 11 à 13, le dispositif de fixation de l'invention est utilisé comme suit :
- l'ensemble vis-écrou 9, 10 est installé dans sa fonction de prémaintien des platines 5, 6 : l'écrou 10 est positionné en vis à vie de la fenêtre 7 dans le même sens longitudinal que celle-ci. L'écrou 10 est introduit dans la fenêtre 7 et la lumière 8 de sorte que le bloc inférieur soit situé en dessous des platines. Les conformations de clippage 12 qui ont été déformées en traversant la fenêtre et la platine sont libérées de toute contrainte et reprennent leur forme initiale, prenant appui sur les bords de la lumière 8. L'écrou 10 ne peut plus être retiré intempestivement. La vis 9 et l'écrou 10 sont alors dans la position angulaire initiale.
- les platines peuvent être déplacées l'une par rapport à l'autre suivant la direction longitudinale X du véhicule, les flancs de guidage 13 ménagés sur le bloc supérieur 15 coopérant en contact ou à distance des bords périphériques de la fenêtre et de la lumière. Ces flancs positionnent les platines l'une par rapport à l'autre suivant la direction transversale Y. La première platine 5 venue de l'aile 1 peut être déplacée relativement à la seconde platine 6 (fixe) solidaire de la structure. Ce déplacement est provoqué vers l'avant (lors de la dilatation de l'aile 1 due au passage en étuve) puis vers l'arrière (l'aile 1 reprenant sa forme initiale en se rétractant par le refroidissement).
- l'ensemble vis-écrou est installé dans sa position de fixation complète. La vis est tournée d'un quart de tour dans le sens horaire (figure 12). La vis 9 entraîne l'écrou 10 en rotation dans le sens horaire jusqu'à une position de butée dans laquelle les flancs de blocage 14 coopèrent en contact avec les bords longitudinaux de la fenêtre 7 et/ou de la lumière 8. La vis est ensuite vissée, toujours en tournant dans le sens horaire faisant remonter l'écrou 10 bloqué en rotation. Les platines 5 et 6 sont ainsi serrées l'une contre l'autre pour assurer leur fixation définitive. Bien entendu, le dispositif de fixation est démontable, les opérations ci-dessus devant être réalisées dans l'ordre inverse.

Avantageusement, le véhicule automobile comprenant un dispositif de fixation selon l'invention permet la fixation améliorée d'un projecteur optique 2. Ce dernier comporte dans sa partie arrière une patte 21 munie d'une zone de fusibilité 22 en cas de choc (figure 3). Cette dernière est de conception classique et bien connue de l'homme de l'art (partie affaiblie et frangible apte à céder lorsqu'un effort dépassant un seuil déterminé est appliqué, ici suivant la direction longitudinale X). A l'arrière de cette zone de fusibilité 22 est prévu un pion d'indexation coopérant directement avec un orifice 23 (figure 4) ménagé dans la première platine 5, dans le prolongement longitudinal de la fenêtre 5 vers l'avant du véhicule. La patte 21 est par ailleurs fixée au support d'aile 4 via une vis de fixation vissée dans un trou 24 correspondant (figure 4), celui-ci étant situé entre l'orifice 23 d'indexation et la zone de fusibilité 22.

## Revendications

1. Dispositif de fixation d'une première platine (5) sur un seconde platine (6) accolées l'une contre l'autre, l'une des platines étant pourvue d'une fenêtre (7) tandis que l'autre platine comporte une lumière de guidage (8) placée en vis-à-vis de la fenêtre (7), comprenant un ensemble vis-écrou, la vis (9) et l'écrou (10) étant introduits au travers de la fenêtre (7) et de la lumière (8) jusqu'à une position de butée dans laquelle une collerette (11) adjacente à la tête de vis (9) prend appui sur l'une des platines, tandis que l'écrou (10) comprend des conformations de clippage (12) coopérant en butée avec l'autre platine pour empêcher l'extraction de l'ensemble vis-écrou, l'écrou (10) comprenant un système quart de tour, mobile sous l'influence d'une rotation imprimée à la vis (9), entre d'une part une position angulaire initiale dans laquelle l'écrou (10) est introduit dans la fenêtre (7) et la lumière (8), l'écrou (10) comportant des flancs de guidage (13) ajustés avec des bords correspondants de la fenêtre (7) et de la lumière (8) pour caler les platines (5 ; 6) l'une par rapport à l'autre transversalement à la direction longitudinale de la lumière (8) tout en autorisant un coulissement relatif entre les platines (5 ; 6) dans la direction longitudinale, et d'autre part une position angulaire finale dans laquelle des flancs de blocage (14) de l'écrou (10) coopèrent en butée contre des bords correspondants de la fenêtre (7) et de la lumière (8) pour limiter la rotation de l'écrou (10), la vis (9) et l'écrou (10) étant de ce fait aptes à être serrés de façon à assurer une fixation complète entre les deux platines (5 ; 6) via des épaulements (17) conformés sur l'écrou (10), lesquels sont décalés angulairement par rapport à la fenêtre (7) et à la lumière (8) pour coopérer en contact avec la platine (6) adjacente **caractérisé en ce que** l'écrou (10) est constitué d'un ensemble monobloc comprenant un corps principal ayant en vue de côté la forme générale d'un T à l'envers s'étendant suivant la direction axiale de vissage, l'épaisseur du T étant inférieure aux dimensions transversales de la fenêtre (7) et de la lumière (8), le corps principal se décomposant d'une part en un bloc supérieur (15) formant la jambe du T sur lequel sont ménagés les flancs de guidage (13) et les flancs de blocages (14) suivant des génératrices cylindriques parallèles à la direction axiale de vissage, et d'autre part en un bloc inférieur (16) formant la branche transversale du T aux extrémités de laquelle sont situés les épaulements (17)et **en ce que** le bloc supérieur (15) a une forme générale inscrite dans un carré dont deux côtés opposés épousent les flancs de guidage (13) et deux autres côtés opposés épousent les flancs de blocage (14), les flancs de guidage (13) et les flancs de blocage (14) se rejoignant sous la forme de deux arêtes opposées (18) et de deux formes arrondies (19) autorisant la rotation d'un quart de tour de l'écrou (10) entre les positions angulaires initiale et finale.

2. Dispositif de fixation selon la revendication 1, **caractérisé en ce que** le bloc inférieur (16) a une forme fuselée depuis son bord adjacent au bloc supérieur (15) vers son bord libre opposé.

3. Dispositif de fixation selon la revendication 2, **caractérisé en ce que** les conformations de clippage (12) s'étendent depuis des faces opposées du bloc inférieur (16) ces faces définissant entre elles l'épaisseur du T.

4. Véhicule automobile comprenant au moins une aile (1) latérale en plastique montée sur la structure du véhicule, l'aile (1) étant fixée dans sa partie avant à un support d'aile (4) solidaire de la structure du véhicule, **caractérisé en ce qu'**il comprend un dispositif de fixation selon l'une quelconque des revendications précédentes, la première platine (5) étant venue de matière avec l'aile (1) tandis que la seconde platine (6) est partie intégrante du support d'aile (4).

5. Véhicule automobile selon la revendication 4, **caractérisé en ce que** la fenêtre (7) est ménagée dans la première platine (5) tandis que la lumière (8) est ménagée dans la seconde platine (6), la longueur de la lumière (8) étant comprise entre 40 mm et 60 mm, la longueur de la fenêtre (7) étant comprise entre 20 et 30 mm.

6. Véhicule automobile selon la revendication 5, **caractérisé en ce qu'**il comprend un projecteur optique (2) comportant dans sa partie arrière une patte (21) munie d'une zone de fusibilité (22) en cas de choc, à l'arrière de laquelle est prévu un pion d'indexation coopérant directement avec un orifice (23) ménagé dans la première platine (5), la patte (21) étant fixée au support d'aile (4) via une vis de fixation située entre le pion d'indexation et la zone de fusibilité (22).

7. Véhicule automobile selon l'une quelconque des revendications 4 à 6, **caractérisé en ce que** la première (5) et la seconde (6) platines s'étendent transversalement à la direction longitudinale (X) depuis l'aile (1) et la structure du véhicule vers l'intérieur du véhicule, la fenêtre (7) et la lumière (8) s'étendant de façon sensiblement parallèle à la direction longitudinale (X) du véhicule.

## Patentansprüche

1. Vorrichtung zur Befestigung einer ersten Platte (5) an einer zweiten Platte (6), die aneinanderliegen, wobei eine der Platten mit einem Fenster (7) versehen ist, während die andere Platte einen Führungsschlitz (8) umfasst, der gegenüber dem Fenster (7) angeordnet ist, umfassend eine Schraube-Mutter-Anordnung, wobei die Schraube (9) und die Mutter (10) durch das Fenster (7) und den Schlitz (8) hindurch bis zu einer Anschlagposition eingeführt werden, in der ein an den Schraubenkopf (9) angrenzender Bund (11) auf einer der Platten aufliegt, während die Mutter (10) Clip-Ausbildungen (12) umfasst, die in Anlage mit der anderen Platte zusammenwirken, um das Herausziehen der Schraube-Mutter-Anordnung zu verhindern, wobei die Mutter (10) ein Viertelumdrehungssystem umfasst, das unter dem Einfluss einer der Schraube (9) auferlegten Drehung beweglich ist zwischen einerseits einer Ausgangswinkelposition, in der die Mutter (10) in das Fenster (7) und den Schlitz (8) eingeführt ist, wobei die Mutter (10) Führungsflanken (13) umfasst, die an die korrespondierenden Ränder des Fensters (7) und des Schlitzes (8) angepasst sind, um die Platten (5, 6) quer zur Längsrichtung des Schlitzes (8) gegeneinander zu sichern und gleichzeitig ein relatives Gleiten zwischen den Platten (5, 6) in Längsrichtung zuzulassen, und andererseits einer Endwinkelposition, in der die Hemmflanken (14) der Mutter (10) in Anlage an korrespondierende Ränder des Fensters (7) und des Schlitzes (8) zusammenwirken, um das Drehen der Mutter (10) zu begrenzen, wobei die Schraube (9) und die Mutter (10) dadurch geeignet sind, so festgezogen zu werden, dass eine vollständige Befestigung zwischen den beiden Platten (5, 6) über Schultern (17) gewährleistet ist, die an der Mutter (10) ausgebildet sind, die winklig in Bezug auf das Fenster (7) und den Schlitz (8) versetzt sind, um in Kontakt mit der angrenzenden Platte (6) zusammenzuwirken, **dadurch gekennzeichnet, dass** die Mutter (10) aus einer Monoblock-Anordnung besteht, die einen Hauptkörper umfasst, der in der Seitenansicht die Grundform eines umgekehrten T hat, das sich entlang der axialen Schraubrichtung erstreckt, wobei die Dicke des T geringer als die Querabmessungen des Fensters (7) und des Schlitzes (8) ist, wobei der Hauptkörper einerseits aus einem oberen Block (15) zusammengesetzt ist, der das Bein des T bildet, an dem die Führungsflanken (13) und die Hemmflanken (14) entlang der zylindrischen Mantellinien parallel zur axialen Schraubrichtung ausgebildet sind, und anderseits aus einem unteren Block (16), der den Querschenkel des T bildet, an dessen Enden die Schultern (17) befindlich sind, und dass der obere Block (15) eine Grundform hat, die in ein Viereck einbeschrieben ist, von dem zwei entgegengesetzte Seiten eng an den Führungsflanken (13) anliegen und die beiden anderen entgegengesetzten Seiten eng an den Hemmflanken (14) anliegen, wobei die Führungsflanken (13) und die Hemmflanken (14) in Form von zwei entgegengesetzten Kanten (18) und von zwei gerundeten Formen (19) zusammentreffen, die das Drehen der Mutter (10) um eine Viertelumdrehung zwischen den Ausgangs- und Endwinkelpositionen zulassen.

2. Befestigungsvorrichtung nach Anspruch 1, **dadurch gekennzeichnet, dass** der untere Block (16) eine spindelartige Form von seinem an den oberen Block (15) angrenzenden Rand bis zu seinem entgegengesetzten freien Rand hat.

3. Befestigungsvorrichtung nach Anspruch 2, **dadurch gekennzeichnet, dass** die Clip-Ausbildungen (12) sich von entgegengesetzten Flächen des unteren Blocks (16) aus erstrecken, wobei diese Flächen untereinander die Dicke des T definieren.

4. Kraftfahrzeug mit mindestens einem seitlichen Kotflügel (1) aus Kunststoff, der an der Struktur des Fahrzeugs montiert ist, wobei der Kotflügel (1) in seinem vorderen Teil an einem Kotflügelhalter (4) befestigt ist, der fest mit der Struktur des Fahrzeugs verbunden ist, **dadurch gekennzeichnet, dass** es eine Befestigungsvorrichtung nach einem der vorhergehenden Ansprüche umfasst, wobei die erste Platte (5) einstückig mit dem Kotflügel (1) ist, während die zweite Platte (6) fester Bestandteil des Kotflügelhalters (4) ist.

5. Kraftfahrzeug nach Anspruch 4, **dadurch gekennzeichnet, dass** das Fenster (7) in der ersten Platte (5) ausgebildet ist, während der Schlitz (8) in der zweiten Platte (6) ausgebildet ist, wobei die Länge des Schlitzes (8) zwischen 40 mm und 60 mm beträgt, wobei die Länge des Fensters (7) zwischen 20 und 30 mm beträgt.

6. Kraftfahrzeug nach Anspruch 5, **dadurch gekennzeichnet, dass** es einen Scheinwerfer (2) umfasst, der in seinem hinteren Teil eine Lasche (21) umfasst, die mit einem Schmelzbarkeitsbereich (22) für den Fall eines Zusammenstoßes versehen ist, hinter dem ein Indexierungszapfen vorgesehen ist, der direkt mit einer Öffnung (23) zusammenwirkt, die in der ersten Platte (5) ausgebildet ist, wobei die Lasche (21) am Kotflügelhalter (4) über eine Befestigungsschraube befestigt ist, die zwischen dem Indexierungszapfen und dem Schmelzbarkeitsbereich(22) befindlich ist.

7. Kraftfahrzeug nach einem der Ansprüche 4 bis 6, **dadurch gekennzeichnet, dass** sich die erste Platte (5) und die zweite (6) Platte quer zur Längsrichtung (X) vom Kotflügel (1) und der Struktur des Fahrzeugs aus zum Inneren des Fahrzeugs hin erstrecken, wobei das Fenster (7) und der Schlitz (8) sich im Wesentlichen parallel zur Längsrichtung (X) des Fahrzeugs erstrecken.

## Claims

1. Device for fastening a first plate (5) on to a second plate (6) attached to one another, one of the plates being provided with a window (7) while the other plate includes a guiding opening (8) placed facing the window (7), comprising a screw-nut assembly, the screw (9) and the nut (10) being introduced through the window (7) and the opening (8) to a position of abutment in which a flange (11) adjacent to the screw head (9) bears on one of the plates, while the nut (10) comprises clipping conformations (12) cooperating by abutment with the other plate to prevent the extraction of the screw-nut assembly, the nut (10) comprising a quarter-turn system, mobile under the influence of a rotation imparted on the screw (9), between, on the one hand, an initial angular position in which the nut (10) is introduced into the window (7) and the opening (8), the nut (10) comprising guiding flanks (13) fitted with corresponding edges of the window (7) and of the opening (8) to align the plates (5; 6) relative to one another transversely in the longitudinal direction of the opening (8) while allowing relative sliding between the plates (5; 6) in the longitudinal direction, and, on the other hand, a final angular position in which the immobilizing flanks (14) of the nut (10) cooperate by abutment against corresponding edges of the window (7) and of the opening (8) to limit the rotation of the nut (10), the screw (9) and the nut (10) being thereby able to be tightened so as to ensure a complete fastening between the two plates (5; 6) via shoulders (17) conformed on the nut (10), which are angularly offset in relation to the window (7) and to the opening (8) to cooperate in contact with the adjacent plate (6), **characterized in that** the nut (10) consists of a one-piece assembly comprising a main body having, in side view, the general form of an upside-down T extending in the axial direction of screwing, the thickness of the T being less than the transverse dimensions of the window (7) and of the opening (8), the main body being subdivided, on the one hand, into a top block (15) forming the leg of the T on which the guiding flanks (13) and the immobilizing flanks (14) are formed along cylindrical generatrices parallel to the axial direction of screwing, and, on the other hand, into a bottom block (16) forming the transverse branch of the T at the ends of which the shoulders (17) are situated and **in that** the top block (15) has a general form inscribed in a square whose two opposite sides mould to the guiding flanks (13) and two other opposite sides mould to the immobilizing flanks (14), the guiding flanks (13) and the immobilizing flanks (14) meeting in the form of two opposing edges (18) and two rounded forms (19) allowing the rotation by a quarter-turn of the nut (10) between the initial and final angular positions.

2. Fastening device according to Claim 1, **characterized in that** the bottom block (16) has a streamlined form from its edge adjacent to the top block (15) to its opposing free end.

3. Fastening device according to Claim 2, **characterized in that** the clipping conformations (12) extend from the opposing faces of the bottom block (16), these faces defining between them the thickness of the tee.

4. Motor vehicle comprising at least one lateral wing (1) made of plastic mounted on the structure of the vehicle, the wing (1) being fastened in its front part to a wing support (4) secured to the structure of the vehicle, **characterized in that** it comprises a fastening device according to any one of the preceding claims, the first plate (5) being made of a single piece with the wing (1) whereas the second plate (6) is an integral part of the wing support (4).

5. Motor vehicle according to Claim 4, **characterized in that** the window (7) is formed in the first plate (5) whereas the opening (8) is formed in the second plate (6), the length of the opening (8) lying between 40 mm and 60 mm, the length of the window (7) lying between 20 and 30 mm.

6. Motor vehicle according to Claim 5, **characterized in that** it comprises a lamp (2) comprising, in its rear part, a tab (21) provided with a zone of fusibility (22) in case of impact, behind which there is provided an indexing pin cooperating directly with an orifice (23) formed in the first plate (5), the tab (21) being fixed to the wing support (4) via a fastening screw situated between the indexing pin and the zone of fusibility (22).

7. Motor vehicle according to any one of Claims 4 to 6, **characterized in that** the first (5) and the second (6) plates extend transversely in the longitudinal direction (X) from the wing (1) and the structure of the vehicle towards the interior of the vehicle, the window (7) and the opening (8) extending substantially parallel to the longitudinal direction (X) of the vehicle.
